(19) Europäisches Patentamt / European Patent Office / Office européen des brevets

(11) **EP 3 476 748 B1**

(12) **FASCICULE DE BREVET EUROPEEN**

(45) Date de publication et mention de la délivrance du brevet:
**15.07.2020 Bulletin 2020/29**

(51) Int Cl.:
**B64G 1/22** *(2006.01)*   **B64G 1/66** *(2006.01)*
**F16C 11/04** *(2006.01)*   **F16C 11/12** *(2006.01)*
**F16D 3/00** *(2006.01)*   **G12B 5/00** *(2006.01)*

(21) Numéro de dépôt: **17198118.6**

(22) Date de dépôt: **24.10.2017**

(54) **MÉCANISME PIVOT À ÉLÉMENTS FLEXIBLES**

SCHWENKMECHANISMUS MIT FLEXIBLEN ELEMENTEN

PIVOT MECHANISM WITH FLEXIBLE ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**01.05.2019 Bulletin 2019/18**

(73) Titulaire: **CSEM Centre Suisse d'Electronique et de Microtechnique SA - Recherche et Développement 2002 Neuchâtel (CH)**

(72) Inventeurs:
• **Cosandier, Florent**
  **2013 Colombier (CH)**
• **Schwab, Philippe**
  **1421 Grandevent (CH)**
• **Kiener, Lionel**
  **1405 Pomy (CH)**

(74) Mandataire: **P&TS SA (AG, Ltd.)**
**Avenue J.-J. Rousseau 4**
**P.O. Box 2848**
**2001 Neuchâtel (CH)**

(56) Documents cités:
**US-A1- 2006 252 297**

## Description

Domaine technique

La présente invention concerne un mécanisme pivot pour le guidage de précision en rotation et permettant de parcourir une plage angulaire importante. La présente invention concerne également un ensemble pivot comprenant un pluralité de mécanismes pivots.

Etat de la technique

Le document EP0974761 décrit un pivot à éléments flexibles permettant une course angulaire inférieure à l'invention proposée. Ce pivot offre des raideurs élevées, mais présente de nombreuses sur-contraintes. Il offre un dégagement autour de son axe central, ce qui est un avantage. Il propose en outre des couplages au niveau des étages intermédiaires, mais ceux-ci n'offrent pas les mêmes avantages que ceux de la présente invention: isostatisme, faible non-linéarité de raideur, grande course. Il est possible de l'empiler de même que la présente invention.

EP2256039 décrit un pivot à lames radiales qui propose une course nettement inférieure à celle de l'invention proposée. Il offre également un dégagement autour de son axe central et propose des couplages rigides au niveau des étages intermédiaires, ce qui est très défavorable à une course élevée. Des variantes proposent des empilements d'étages successifs ou encore une disposition en « sandwich », c'est-à-dire où le deuxième étage est réparti en deux moitiés égales disposées à l'extérieur du premier étage. Ceci évite un mouvement de torsion des portions intermédiaires ainsi qu'un déplacement axial de la sortie du pivot. Ce pivot propose une disposition des lames avec l'entrée et la sortie du mécanisme à l'intérieur alors que l'étage intermédiaire est disposé à l'extérieur.

WO2017077469 décrit un pivot permettant de couvrir une large plage angulaire. Le mouvement parasite de raccourcissement apparent des lames est déporté à l'extérieur du pivot, au niveau des encastrements des lames radiales, ce qui provoque une dérigidification de l'ensemble du pivot. Le pivot possède des liaisons intermédiaires non-couplées, qui premièrement constituent des degrés de liberté internes, ce qui est très défavorable pour la tenue aux vibrations et deuxièmement, du fait de l'absence de couplage entre les liaisons intermédiaires, les raideurs latérales en seront fortement prétéritées, particulièrement dans une position fléchie du pivot.

Les pivots flexibles présentés dans l'état de l'art sont généralement constitués de pivots simples, qui sont empilés de manière sérielle lorsque l'on désire augmenter la course angulaire.

Bref résumé de l'invention

L'invention décrite ici propose un mécanisme pivot pour le guidage en rotation, comprenant une pièce mobile relié à une pièce fixe par l'intermédiaire de liaisons flexibles; les éléments flexibles étant configurés de manière à guider la pièce mobile selon un mouvement en rotation dans un plan, autour d'un axe de pivotement du pivot, perpendiculaire au plan; chacune des liaisons flexibles comprenant une jonction intermédiaire, chaque jonction intermédiaire étant séparée des jonctions intermédiaires adjacentes par une fente d'expansion, la fente d'expansion étant configurée pour s'élargir lors de la rotation de la pièce mobile, de manière à ce que ce dernier puisse pivoter selon une seconde amplitude angulaire plus grande qu'une première amplitude angulaire obtenue en absence de ladite fente d'expansion; les jonctions intermédiaires étant reliées entre elles par un élément de couplage; chacun des éléments de couplage étant configuré de manière à empêcher un mouvement hors du plan et un mouvement latéral dans le plan de la pièce mobile.

L'invention décrite ici propose un mécanisme pivot pour le guidage en rotation présentant une cinématique parallèle. Dans le mécanisme pivot à cinématique parallèle, la sortie (la pièce mobile) est liée à une base fixe par l'intermédiaire de plusieurs chaines cinématiques indépendantes (en parallèle). Cette configuration offre des performances remarquables en termes de précision et de raideur, entre autres. On entend par performances de raideur des rapports élevés entre les raideurs des mouvements transverses bloqués et la raideur du mouvement libre du pivot autour de son axe de rotation. Si les performances de raideur peuvent être souvent accompagnées d'un degré de sur-contraintes élevé, ceci n'est pas le cas de la structure présentée, qui décrit effectivement un mécanisme quasi-isostatique.

Le mécanisme pivot de l'invention, un éventuel mouvement parasite est absorbé à l'intérieur du pivot par les éléments de couplage, ce qui tend à rigidifier l'ensemble des mouvements bloqués du pivot.

Dans le mécanisme pivot de l'invention, aucun degré de liberté interne n'est sensible aux vibrations ou ne crée une perte de raideur lorsque le mécanisme pivot est pivoté par rapport à une position d'équilibre et que les liaisons flexibles sont défléchies.

Brève description des figures

D'autres avantages, buts et caractéristiques de la présente invention ressortiront de la description qui va suivre, faite, dans un but explicatif et nullement limitatif, en regard des figures annexées dans lesquelles:

la figure 1 montre un mécanisme pivot pour le guidage en rotation, selon un mode de réalisation;

la figure 2 montre une vue de dessus du mécanisme pivot de la figure 1;

la figure 3 montre un schéma d'une vue linéarisée des liaisons cinématiques du mécanisme pivot de la figure 1;

les figures 4a à 4d représentent un schéma d'un équivalent cinématique du mécanisme pivot de la figure 1;

les figures 5a et 5b représentent un schéma permettant de distinguer la sur-contrainte du mécanisme pivot de la figure 1;

les figures 5c et 5d représentent schématiquement les sur-contraintes engendrée par la liaison de trois éléments de couplage du mécanisme pivot;

les figures 6a à 6e illustrent des lames principales du mécanisme pivot, selon différentes formes d'exécution;

la figure 7 représente schématiquement des éléments de couplages du mécanisme pivot, selon un mode de réalisation;

les figures 8a et 8b montrent une vue isométrique (figure 8a) et une vue de dessus (figure 8b) du mécanisme pivot, selon un autre mode de réalisation;

les figures 9a et 9b montrent une vue isométrique (figure 9a) et une vue de dessous (figure 9b) d'un ensemble pivot comprenant deux mécanismes pivot, selon un mode de réalisation;

la figure 10 montre l'ensemble pivot dans une position pivotée angulairement;

la figure 11 représente un schéma fonctionnel de l'ensemble pivot selon la variante de la figure 9;

la figure 12 montrent une vue isométrique de l'ensemble pivot, selon un autre mode de réalisation;

les figures 13a à 13c représentent un élément de couplage du mécanisme pivot, selon différentes formes d'exécution; et

la figure 14 compare les performances des raideurs transverses du mécanisme pivot de l'invention avec celle d'un pivot typique des mécanismes flexibles.

Exemple(s) de mode de réalisation de l'invention

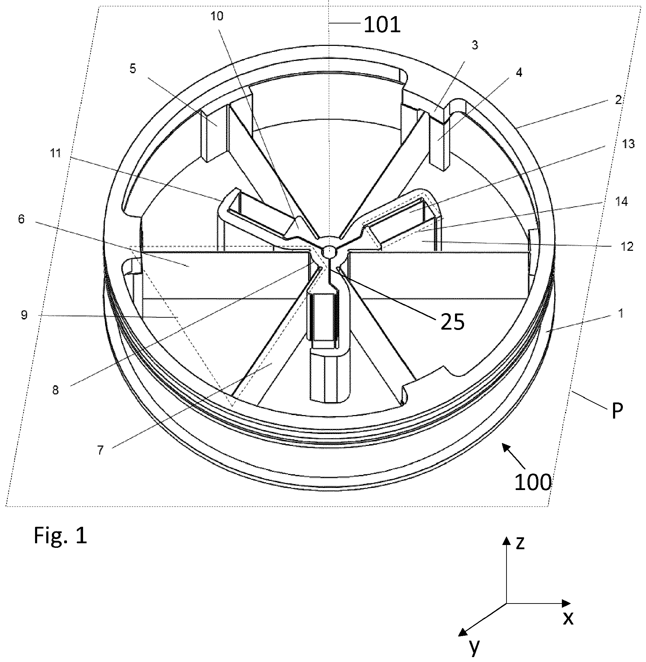

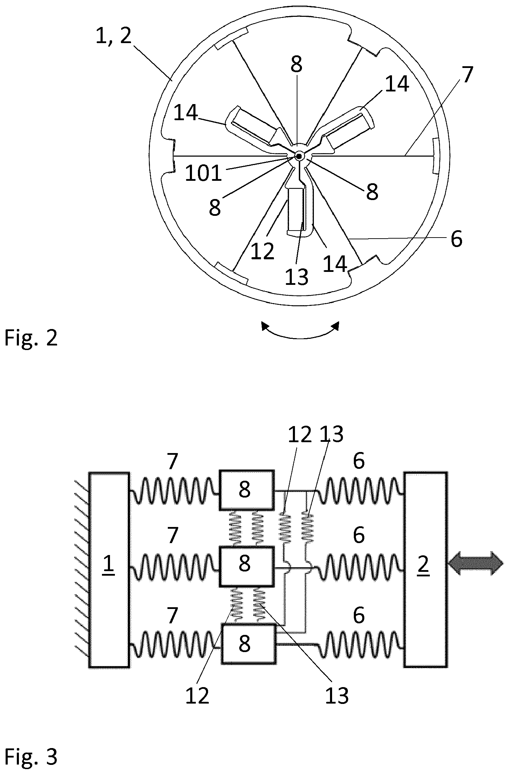

La figure 1 montre une vue isométrique d'un mécanisme pivot 100 (également appelé "pivot" par la suite) à symétrie radiale et la figure 2 montre une vue de dessus du pivot 100, selon un mode de réalisation. En particulier, le pivot 100 comprend une pièce mobile 2 (prenant la forme d'un anneau mobile dans la figure 1) relié à une pièce fixe 1 (prenant également la forme d'un anneau) par l'intermédiaire d'un nombre N de liaisons flexibles (ou articulées) 9. L'anneau fixe 1 est destiné à être attaché à une base fixe (non représentée). La base fixe peut se situer à l'extérieur ou à l'intérieur de l'anneau fixe 1. N vaut 3 dans l'exemple choisi. Dans le mode de réalisation de la figure 1, chacune des liaisons flexibles 9 comprend une première lame principale flexible 6 et une seconde lame principale flexible 7, chacune des lames principales 6, 7 s'étendant radialement à partir de l'axe de pivotement 101 du pivot 100. Les lames principales 6, 7 sont espacées angulairement l'une par rapport à l'autre de 60°, selon l'exemple choisi, mais pourraient être espacées d'un autre angle, par exemple d'un angle valant 360/(2*N) degrés.

Une extrémité de la première lame principale 6 est reliée à l'anneau mobile 2 et l'autre extrémité est reliée à une jonction intermédiaire 8. Une extrémité de la seconde lame principale 7 est reliée à l'anneau fixe 1 et l'autre extrémité est reliée à la jonction intermédiaire 8. La jonction intermédiaire 8 est disposée entre la première lame principale 6 et la seconde lame principale 7, à proximité de l'axe de pivotement 101. La première lame principale 6, la jonction intermédiaire 8 et la seconde lame principale 7 sont donc arrangées cinématiquement en série. La configuration du pivot 100 de la figure 1 comportant trois paires de lames principales 6, 7 comprend donc trois jonctions intermédiaires 8. Dans une configuration du pivot 100 comprenant N de liaisons flexibles 9, le pivot 100 comprendra N jonctions intermédiaires 8.

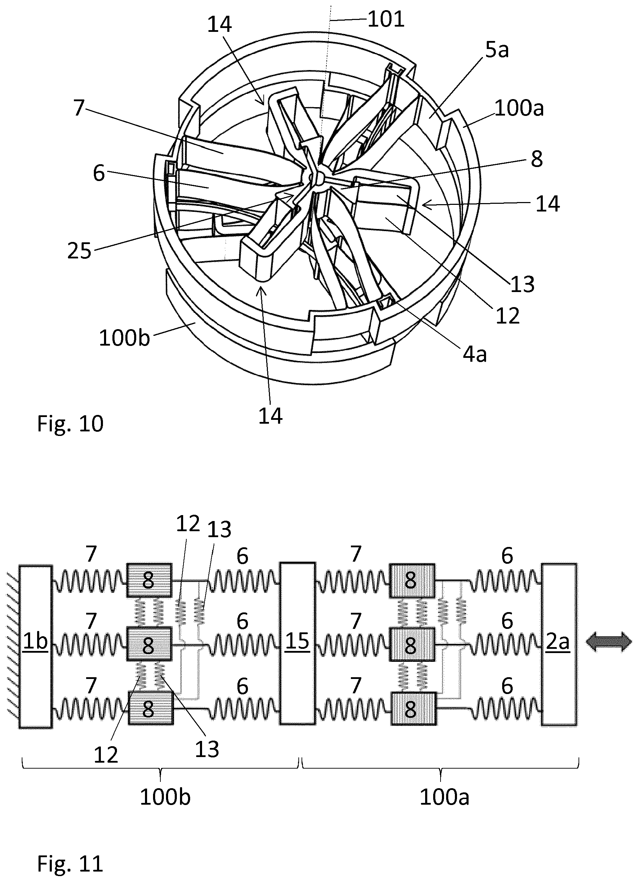

Les éléments flexibles 9 sont configurés de manière à guider un mouvement en rotation, autour de l'axe de pivotement 101 du pivot 100, de l'anneau mobile 2 dans un plan P essentiellement perpendiculaire à l'axe 101. Dans la figure 1, le plan P est représenté par les coordonnées cartésiennes x, y et l'axe de pivotement 101 s'étend selon z. En particulier, les liaisons flexibles 9 exercent une force de rappel sur l'anneau mobile 2 de sorte que, lorsque l'anneau mobile 2 est pivoté selon un angle donné à partir d'une position de repos, ce dernier pivote en oscillation autour de l'axe de pivotement 101 avec une première amplitude angulaire (ou course angulaire) $\theta_1$ qui dépend des liaisons flexibles 9. Chacune des jonctions intermédiaires 8 comprend une fente d'expansion 25. Lors de la rotation de l'anneau mobile 2, la fente d'expansion 25 peut s'élargir de manière à permettre une seconde amplitude angulaire $\theta_2$ plus grande que la première amplitude angulaire $\theta_1$. La figure 10 illustre un pivot 100 dans une position pivotée autour de l'axe 101, montrant les premières et secondes lames principales 6, 7 fléchies et la fente d'expansion 25 des jonctions intermédiaires 8 en configuration ouverte.

Dans la forme d'exécution du pivot 100 illustré à la figure 1, la première lame principale 6 et la seconde lame principale 7 s'étendent entre l'axe de pivotement 101 et les anneaux 1, 2 dans le plan P. Une extrémité de la première lame principale 6 est fixée sur l'anneau mobile 2 par l'intermédiaire d'une première liaison (préférablement rigide) 4 déportée, sans contact avec l'anneau fixe 1 et solidaire de l'anneau mobile 2, par exemple par le biais d'une jonction rigide 3. La seconde lame principale 7 est fixée sur l'anneau fixe 1 par le biais d'une seconde liaison fixe 5.

Dans un mode de réalisation préféré, les jonctions intermédiaires 8 sont reliées entre elles, deux par deux, par un élément de couplage 14.

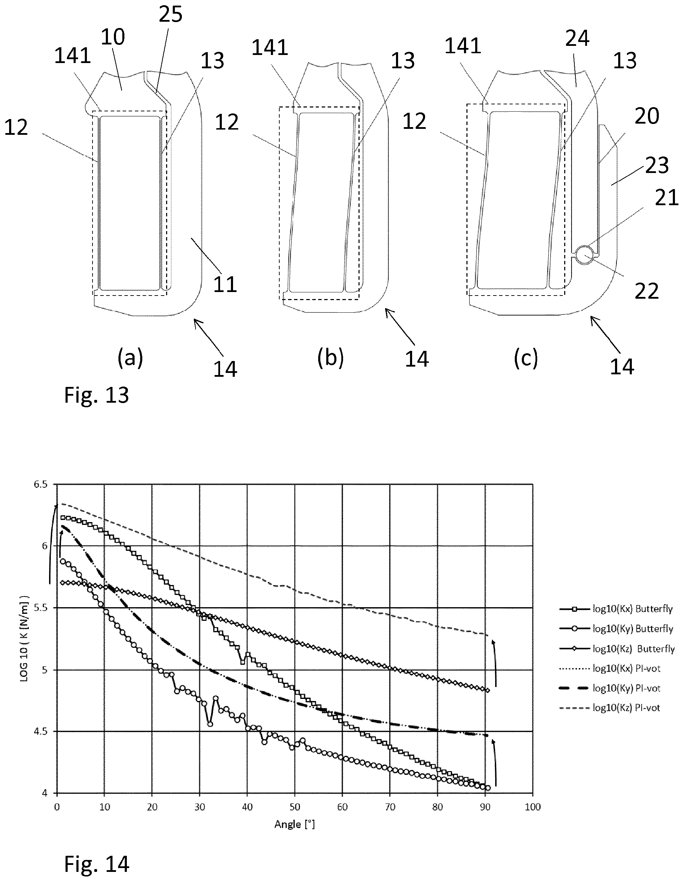

Dans l'exemple illustré à la figure 1, l'élément de couplage 14 comprend deux lames flexibles de couplage 12, 13 arrangées de manière parallèle et fixées à l'une de leur extrémités à un cadre rigide long 11 solidaire de la jonction intermédiaire 8, et à l'autre extrémité proximale de l'axe de pivotement 101, à un cadre rigide court 10, également solidaire de la jonction intermédiaire 8. Dans cette configuration, l'élément de couplage 14 forme une table de translation 141 à lames parallèles (voir figure 13). La fente d'expansion 25 est préférablement pratiquée entre le cadre rigide long 11 et le cadre rigide court 10.

Dans une configuration où les jonctions intermédiaire 8 comprennent une fente d'expansion 25, chacun des éléments de couplage 14 est configuré de manière à empêcher un mouvement hors du plan P de l'anneau mobile 2 et à obtenir une rigidité latérale, c'est-à-dire empêcher un mouvement latéral de l'anneau mobile 2 dans le plan P (autrement dit, en x, y).

Plus particulièrement, les éléments de couplage 14 ont pour fonction de permettre l'expansion simultanée des fentes d'expansion 25 des jonction intermédiaire 8, tout en bloquant le mouvement de gauchissement (mouvement de torsion ou mouvement hors du plan P) des jonction intermédiaire 8 ainsi que leurs expansion non-simultanée, soit leur équidistance avec l'axe de pivotement 101 du pivot 100 (rigidité latérale).

Le schéma de la figure 3 montre une vue linéarisée des liaisons cinématiques du pivot 100 de la figure 1. Dans le schéma, l'anneau fixe (entrée) 1 et l'anneau mobile (sortie) 2 sont représentés par les rectangles aux deux extrémités, les jonctions intermédiaires 8 sont représentées par les rectangles entre les "grands ressorts" représentant, d'un côté, les lames principales 7 et, de l'autre côté, les lames principales 6. Les lames de couplage 12 et 13 sont représentées par les "petits ressorts". Le caractère mobile de l'anneau mobile 2 est illustré par la flèche.

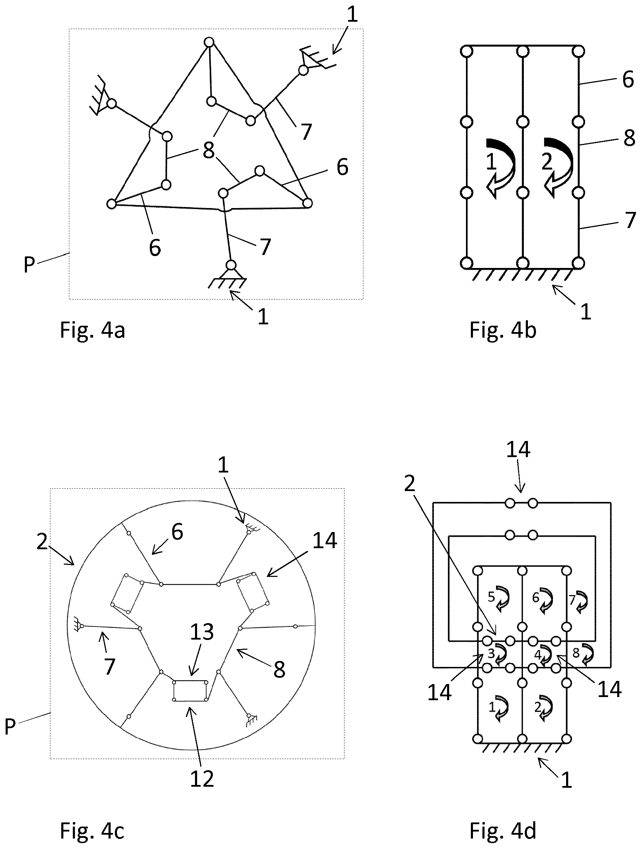

La figure 4a montre une représentation équivalente de la cinématique du mécanisme pivot 100 de la figure 1. Chacune des lames principales 6, 7 sont modélisées par deux points pivots fictifs (représentés par les cercles) dans le plan P. Les segments rigides sont symbolisés par des lignes continues. L'anneau fixe 1 par les symboles d'ancrage.

Afin de mettre en évidence le nombre de boucles cinématiques, le schéma de la figure 4a est réarrangé en celui de la figure 4b. La figure 4b montre que les lames principales 6, 7 et les jonctions intermédiaires 8 forment deux boucles cinématiques (représentées par les flèches). De plus, le nombre de pivots fictifs est de 12 (quatre pivots fictifs pour les liaisons flexibles comprenant chacune une première et seconde lame principale 6, 7 et une jonction intermédiaire 8).

La figure 4c montre une représentation équivalente de la cinématique du mécanisme pivot 100 de la figure 1 incluant les lames de couplage 12, 13, modélisées par deux points pivots fictifs et incluant l'anneau mobile 2, représenté par le cercle. La figure 4d réarrangée montre que le système comprend huit boucles b cinématiques (b = 8). De plus, le nombre de pivots fictifs p correspond à 24 (p = 24).

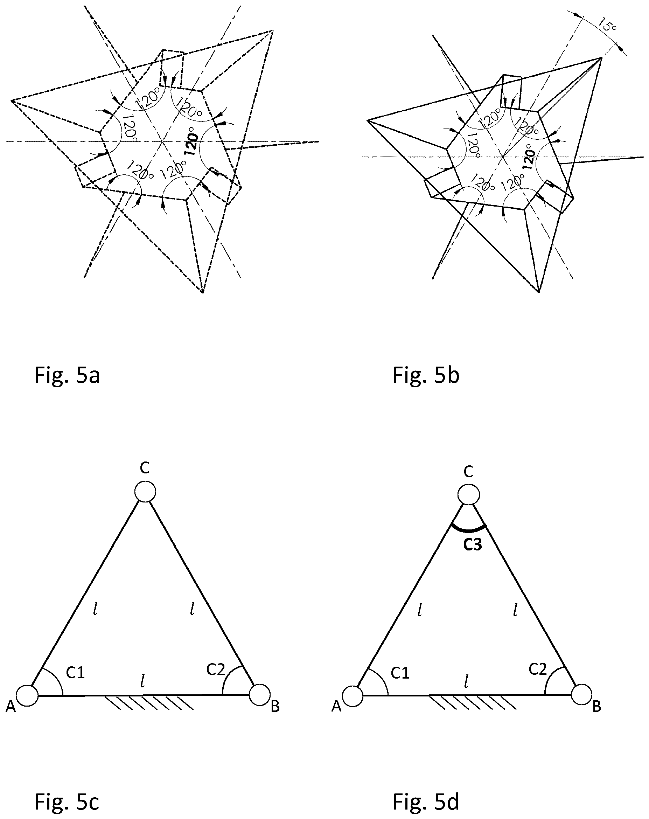

Chacun des éléments de couplage 14 possède un degré de liberté en translation mais fixe les autres mouvements, notamment l'orientation des segments adjacents à l'élément de couplage 14. Les figures 5a et 5b représentent un schéma permettant de distinguer la sur-contrainte du mécanisme pivot de la figure 1. En particulier, les figures 5a et 5b permettent de distinguer les degrés de liberté internes et externes du pivot 100 avec les éléments de couplage 14. Dans la figure 5a, toute la structure du pivot 100 est libre de se déplacer, les entités non contraintes sont représentées en traits tillés. Chacun des angles de 120° représente un angle topologique de la boucle cinématique. Sur la figure 1, chacun de ces angles peuvent représenter l'angle entre le cadre rigide court 10 et le cadre rigide long 11 de deux éléments de couplage 14 adjacents. L'angle en gras représente une sur-contrainte la structure du pivot 100. Dans la figure 5b, une seule contrainte de position ajoutée sur la sortie 2 du mécanisme (par exemple un déplacement de 15° de la sortie 2) permet de bloquer l'ensemble de la structure. Les entités contraintes (fixées) sont en trait noir plein. Les entités contraintes sont représentées en traits pleins.

Les figures 5c et 5d représentent schématiquement la sur-contrainte engendrée par la liaison des trois éléments de couplage 14. Les points A, B et C représentent des points reliés par les éléments de couplage 14. Lorsque l'on fixe le segment AB, les points A et B sont définis. Puis à partir du point A, on fixe le segment AC avec une longueur $l$ libre et une orientation donnée, imposée par la contrainte angulaire C1. De même, le segment BC est disposé avec une longueur $l$ variable et une orientation imposée par la contrainte C2. Ainsi les orientations de chacun des segments du triangle sont définies. Lorsque l'on rajoute la contrainte C3, qui définit l'orientation entre les segments AC et BC, on ajoute une sur-contrainte, car celle-ci est déjà donnée indirectement par les contraintes C1 et C2, ainsi que la topologie des liaisons.

Les figures 5a à 5d montrent que le mécanisme pivot 100 est isostatique extérieurement. C'est-à-dire que le système est libre de se déplacer avec un degré de liberté en rotation (figure 5a) et l'ajout d'une seule contrainte de position angulaire bloque l'ensemble du mécanisme (figure 5b). Il n'y a donc pas de degré de liberté interne ($DDL_{int}$ = 0) et il y a un seul degré de liberté externe ($DDL_{ext}$ = 1).

La structure présente toutefois une sur-contrainte C3. La boucle centrale est définie par un nombre surnuméraire de contraintes angulaires. Nous avons donc H = 1.

La vérification des grandeurs trouvées précédemment se fait par l'égalité suivante, dérivée de la formule de Grübler:

$$DDL_{ext} + DDL_{int} = H + p - (3 \times b) \qquad \text{(equation 1)}$$

$$1 + 0 = 1 + 24 - (3 \times 8)$$

Cette analyse confirme la présence d'une sur-contrainte et l'absence de degré de liberté interne. Par degrés de liberté interne, on entend des modes de déplacement entièrement libre d'une partie du mécanisme pivot 100. Cependant, il y a d'autres modes de déplacement qui ne sont pas caractérisés par cette analyse. Il s'agit par exemple des modes de vibration aux fréquences propres du mécanisme pivot 100. Ces modes de vibration correspondent à des modes propres de vibrations des lames 6, 7, 12, 13 ainsi que du mode en rotation du pivot 100 autour de l'axe 101, comprenant les jonctions intermédiaires 8 et les éléments de couplage 14. Toutefois ces modes de déplacement ne peuvent pas être assimilés véritablement à des degrés de liberté et présentent des raideurs hautement non-linéaires. Ils ne mènent donc pas à des déplacements élevés. Concernant les modes propres de vibration des lames 6, 7, 12, 13, ils interviennent à des fréquences très élevées et ne sont donc pas gênants. Concernant le mode propre de rotation du mécanisme pivot 100 autour de l'axe 101, comprenant les jonctions intermédiaires 8 et les éléments de couplage 14, son déplacement angulaire n'influence pas la position de centrage du pivot 100. Ainsi, nous pouvons être assurés de qualité de guidage en rotation du pivot 100.

Le pivot 100 selon l'invention est compact et constitué uniquement par des éléments quasi bidimensionnels. De plus, le centre géométrique du pivot 100 (correspondant à l'axe de pivotement 101) ne se déplace pas lors de la déflection des lames 6, 7, 12, 13 et les modes de vibration n'ont pas d'effet sur la position du centre géométrique du pivot 100. Par ailleurs, aucun mode interne n'est excité par une perturbation externe translationnelle. Aussi, une très grande course angulaire peut être atteinte. Cette course dépend directement du nombre de liaisons flexibles 9. En effet, plus les leurs nombre est élevé, plus les éléments mobiles vont interférer les uns avec les autres rapidement lors de la rotation. Les éléments de couplage 14 (à lames parallèles) augmentent significativement les raideurs transverses du pivot 100 et constituent une des améliorations majeures de ce pivot par rapport à ceux de l'état de l'art. Finalement, afin d'augmenter la course angulaire, plusieurs pivots semblables peuvent aisément être empilés sans perdre les caractéristiques de performance.

Le matériau constituant les pièces du pivot 100 est préférentiellement un métal, mais il peut aussi comprendre le quartz, un verre, un verre métallique, du silicium ou encore un polymère.

Le pivot 100 décrit ici présente de nombreux avantages. Le pivot 100 permet notamment d'obtenir une course angulaire élevée, par exemple une seconde amplitude angulaire $\theta_2$ autour de 45° par rapport à une première amplitude angulaire $\theta_1$ qui serait typiquement d'environ 10° à 15° dans le cas où les jonctions intermédiaires 8 ne comprennent pas de fente d'expansion 25. Par exemple, le pivot 100 de l'invention permet d'obtenir une augmentation d'amplitude (différence entre la seconde amplitude angulaire $\theta_2$ et la première amplitude angulaire $\theta_1$) entre deux fois et quatre fois la première amplitude angulaire $\theta_1$ au maximum, ou typiquement entre deux fois et trois fois la première amplitude angulaire $\theta_1$.

Des bonnes performances de raideurs transverses (mouvement hors du plan P de l'anneau mobile 2) sont atteintes, même pour des déflections élevées du pivot 100. Par exemple, on peut obtenir un rapport de raideur de 30'000 pour Kr / KRz, en considérant KRz comme une raideur linéaire avec pour rayon, la dimension externe du pivot 100. Le rapport Kr / KRz correspond au quotient de la raideur radiale par la raideur angulaire naturelle rapportée au diamètre externe de l'anneau 1, 2, où la raideur angulaire naturelle correspond à la raideur de rotation du pivot 100 autour de l'axe de pivotement 101. Un rapport de raideur plus élevé que 10'000 est admis comme valeur caractéristique d'un bon guidage flexible. Les raideurs latérales du pivot 100 sont homogènes, c'est-à-dire pratiquement les mêmes, quelle que soit la direction radiale.

Selon les caractéristiques dimensionnelles du pivot 100, il est possible d'obtenir une raideur naturelle quasi-constante. La position du centre géométrique du pivot100 (correspondant à l'axe de pivotement 101) ne varie pas au cours de la rotation dans les directions latérales (rigidité latérale, empêchant un mouvement dans le plan P) et varie extrêmement peu dans la direction axiale (c'est-à-dire dans la direction de l'axe 101).

Le pivot 100 ne présente pas de degrés de libertés internes. Le pivot 100 ne présente que peu de sur-contraintes. Il est possible, selon le mode de construction du pivot 100, de n'avoir aucune sur-contrainte dans le plan P.

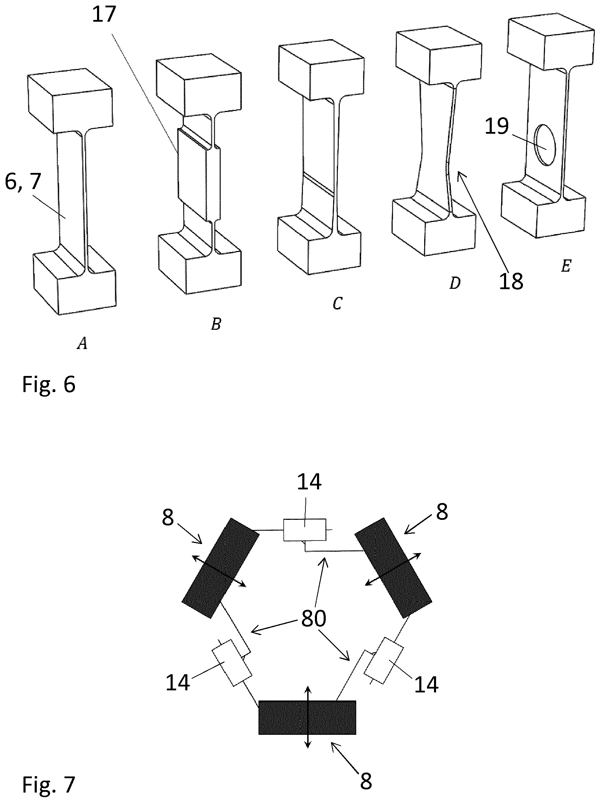

Selon une forme d'exécution illustrée dans la figure 6, chacune des lames principales 6, 7 et/ou lames de couplage 12, 13, 16 sont de type droites (figure 6a). Chacune des lames principales 6, 7 et/ou lames de couplage 12, 13, 16 peut comporter une portion de rigidification 17 en leur milieu (figure 6b). Chacune des lames principales 6, 7, et/ou lames de couplage 12, 13, 16 peut également comporter un profil non-droit 18, en étant par exemple affinées en leur point d'inflexion 18 (figure 6c). Chacune des lames principales 6, 7 et/ou lames de couplage 12, 13, 16 peut être droite en épaisseur, mais présenter une variation de raideur par une largeur non-constante (figure 6d). La largeur non-constante peut également être obtenue par une ouverture 19 pratiquée dans la lame (figure 6e). L'ouverture peut être de forme circulaire, ovale ou rectangulaire le long de la section longitudinale de la lame. De manière extensive, chacune des lames principales 6, 7 et/ou lames de couplage 12, 13, 16 peut présenter un profil définit par une fonction polynômiale.

D'autres configurations (non représentées) des liaisons flexibles 9 sont également possibles. Par exemple, les première et seconde lames principales 6, 7 peuvent être arrangées de manière non radiale autour de l'axe de pivotement 101 mais plutôt être décalées latéralement, c'est-à-dire par rapport à la direction radiale. Par exemple, les première et seconde lames principales 6, 7 peuvent être décalées latéralement par paires, afin que chacune des deux lames 6, 7 se croisent en un point qui est décalé par rapport au centre géométrique du pivot 100. On entend par croisement des lames 6, 7 un point virtuel d'intersection, car il n'y a pas physiquement de croisement lames. Alternativement, les lames principales 6, 7 peuvent être inclinées par rapport à leur orientation radiale dans le plan P (ces lames sont dites tangentielles et peuvent ne pas toutes se rejoindre au centre (sur axe de pivotement 101). Ces variantes permettent d'augmenter encore la compacité du pivot 100.

Les éléments de couplages 14 peuvent prendre différentes formes. Il peut s'agir soit d'éléments flexibles soit d'éléments glissants, soit d'éléments roulants.

A la figure 7, les trois jonctions intermédiaires 8 avec les trois éléments de couplage 14 du mécanisme pivot 100 de la figure 1 sont représentées schématiquement, selon une forme d'exécution. En particulier, chacun des éléments de couplage 14 forme une glissière représentée par l'élément glissant 80, solidaire de la jonction intermédiaire 8 et pouvant se déplacer (glisser) latéralement le long de l'élément de couplage 14 lorsque le mécanisme pivot 100 est défléchi. Les éléments de couplages 14 formant glissière permettent aux jonctions intermédiaires 8 d'avoir un mouvement relatif d'expansion les unes par rapport aux autres, lors de la déflection du mécanisme pivot 100, tout en permettant un mouvement commun des jonctions intermédiaires 8 en rotation autour de l'axe du pivot 100.

Les éléments de couplage 14 formant glissière peuvent être réalisés par des éléments flexibles (tels que des lames flexibles). Par exemple, deux lames flexibles parallèles peuvent être arrangées de manière à réaliser une glissière, telle qu'un rail ou une table linéaire, se déplaçant seulement en translation. Une seule lame peut également être utilisée afin de réaliser un guidage en translation. Tout autre ensemble d'éléments flexibles permettant un guidage total ou partiel des jonctions intermédiaires 8 les unes par rapport aux autres peut également être utilisé.

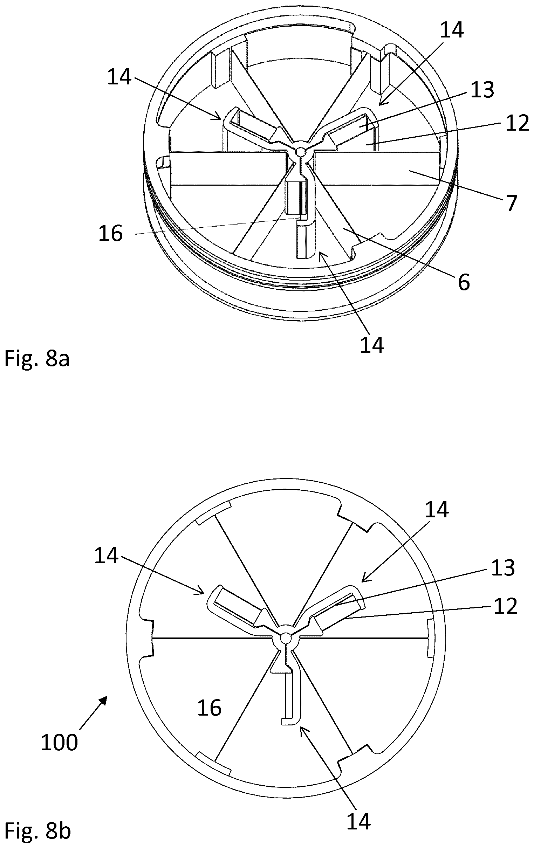

La figure 8 montre une vue isométrique (figure 8a) et une vue de dessous (figure 8b) du pivot 100 selon un autre mode de réalisation. Dans cette variante, l'un des trois éléments de couplage 14 ne comporte qu'une seule lame de couplage 16. Cet arrangement permet de faire disparaitre l'unique sur-contrainte planaire présente dans la configuration du pivot 100 de la figure 1.

Un autre avantage de cette implémentation est de rendre le pivot 100 isostatique. En effet, selon le mode de réalisation des figures 1 et 2, la boucle cinématique centrale est constituée d'une série de trois éléments de couplage 14 comprenant chacun deux lames de couplage 12, 13 parallèles, chacune des lames 12, 13 imposant l'orientation dans le plan P d'une jonction intermédiaire 8 par rapport à une autre. Ainsi, si l'on parcourt la chaine cinématique formée par les éléments de couplage 14 et les jonctions intermédiaires 8 (voir la figure 4a), depuis une jonction intermédiaire 8, on constate que l'orientation angulaire des segments est imposée tout au long de la chaine. Lorsque l'on a fait le tour de la boucle cinématique (voir la figure 4b) on s'aperçoit que l'orientation de la portion de départ est imposée deux fois. C'est ici qu'apparait la sur-contrainte. Toutefois, dans le cas d'un usinage monolithique du pivot 100, ainsi qu'en l'absence de gradient thermique au sein du pivot 100, cette sur-contrainte n'a pas d'effet néfaste.

Il va de soi que la présente invention n'est pas limitée au mode de réalisation qui vient d'être décrit et que diverses modifications et variantes simples peuvent être envisagées par l'homme de métier sans sortir du cadre de la présente invention.

Par exemple, il est possible d'assembler plusieurs pivots 100 et de les empiler afin d'obtenir un ensemble pivot ayant une course angulaire encore plus grande.

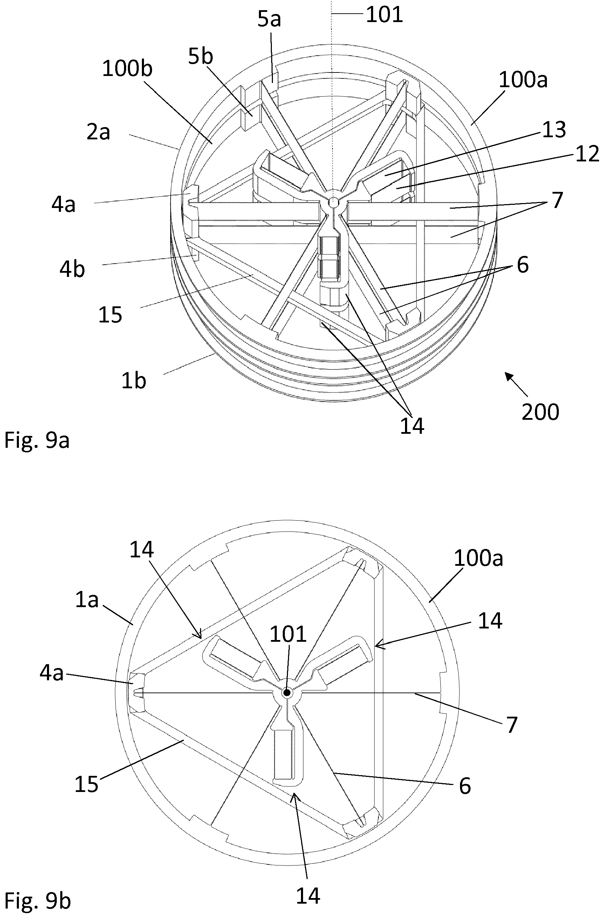

La figure 9 montre une vue isométrique (figure 9a) et une vue de dessus (figure 9b) d'un ensemble pivot 200 selon un mode de réalisation. L'ensemble pivot 200 comporte deux mécanismes pivot 100a et 100b montés superposés de manière concentrique sur le même axe de pivotement 101. Dans cette configuration, la pièce mobile (ici, l'anneau mobile) 2a du pivot supérieur 100a (étage supérieur) et la pièce fixe (ici, l'anneau fixe) 1b du pivot inférieur 100b (étage inférieur) représentent respectivement la sortie et l'entrée de l'ensemble pivot 200. L'anneau mobile du pivot inférieur 100b, qui correspond à l'anneau mobile 2 du pivot 100 de la figure 1, est remplacé dans l'ensemble pivot 200 par une pièce de couplage inter-étage 15, cinématiquement liée à l'anneau fixe 1b par l'intermédiaire des lames principales 6, 7 du pivot inférieur 100b et liée rigidement à l'anneau mobile 2a du pivot supérieur 100a. Dans l'exemple illustré à la figure 9, la première lame principale 6 du pivot inférieur 100b est reliée à l'anneau fixe 1b par une première liaison inférieure 4b. La seconde lame principale 7 du pivot inférieur 100b est reliée à la pièce de couplage inter-étage 15 par une seconde liaison inférieure 4b. La première lame principale 6 du pivot supérieur 100a est reliée à la pièce de couplage inter-étage 15 par une première liaison supérieure 4b et la seconde lame principale 7 du pivot supérieur 100a est reliée à l'anneau mobile 2a du pivot supérieur 100a par une première liaison supérieure 4a.

En fonctionnement, l'anneau fixe 1b peut être fixé à une base fixe. La pièce de couplage inter-étage 15 pivote par fléchissement des lames principales 6, 7 (et des lames de couplage 12, 13) du pivot inférieur 100b et l'anneau mobile 2a du pivot supérieur 100a fléchissement des lames principales 6, 7 (et des lames de couplage 12, 13) du pivot supérieur 100a. La figure 10 montre l'ensemble pivot 200 dans une position pivotée angulairement autour de l'axe 101. On y voit les lames principales 6, 7 ainsi que les lames de couplage 12, 13 défléchies. Dans le cas où la course angulaire de la pièce de couplage inter-étage 15 et de l'anneau mobile du pivot supérieur 100a est sensiblement la même, la course angulaire de l'ensemble pivot 200 est sensiblement le double de celle du pivot simple 100. Sur la figure, on voit également la fente d'expansion 25 permettant une plus grande expansion radiale des jonctions intermédiaires 8 et augmentant la course angulaire de chacun des pivots 100a, 100b, 100c. L'ensemble pivot 200 comprenant deux pivots 100 permet d'obtenir une course angulaire élevée, par exemple autour de 90°.

La figure 11 représente un schéma fonctionnel de l'ensemble pivot 200 selon la variante de la figure 9. On y retrouve, pour chacun des pivots 100a, 100b, les lames principales 6, 7, les lames de couplage 12, 13, les jonctions intermédiaires 8, ainsi que l'entrée (l'anneau fixe) 1b et la sortie (l'anneau mobile) 2a. L'ensemble pivot 200 comprend un degré de liberté interne correspondant à la pièce de couplage inter-étage 15 qui est libre de pivoter sans contrainte autour de l'axe 101. Cependant, les pièces mobiles de l'ensemble pivot 200 (c'est-à-dire l'anneau mobile 2a du pivot supérieur 100a et la pièce de couplage inter-étage 15) étant axisymétriques (le centre de masse de ces deux pièces sont centrés sur l'axe 101), la rotation de ces pièces mobiles ne sera pas affectée par des chocs ou vibration en translation de l'ensemble pivot 200. Autrement dit, le mode de vibration en rotation de la pièce de couplage inter-étage 15 ne peut pas être excité par une perturbation en translation exercée sur l'ensemble pivot 200, le centre de masse sur 101 de l'ensemble pivot 200 ne pivotant que sur l'axe 101.

On comprendra que l'ensemble pivot 200 peut comporter plus de deux pivots 100, par exemple trois, ou même M pivots 100. Les pivots 100 de l'ensemble pivot 200 peuvent être empilés soit par décalage axial d'un des pivots par rapport aux autres pivots 100. Les pivots 100 de l'ensemble pivot 200 peuvent également être empilés par chiralité, c'est-à-dire que deux pivots adjacents dans un empilement de pivots 100 sont arrangés de sorte à être l'image miroir l'un de l'autre dans le plan P.

Des pivots tels que décrit (l'ensemble pivot 200) peuvent être empilés afin d'obtenir un pivot avec une course augmentée d'un facteur équivalent au nombre d'étages. L'ensemble pivot 200 est compact et n'est constitué uniquement que par des éléments quasi bidimensionnels. Autrement dit, chacun des pivots 100, 100a, 100b peut être fabriqué par des techniques d'usinage bidimensionnelles.

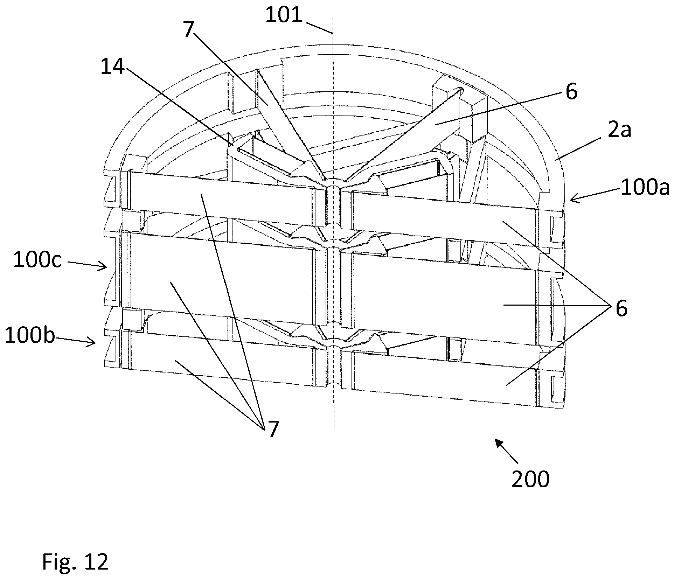

Selon une forme d'exécution représentée à la figure 12, l'ensemble pivot 200 comporte trois mécanismes pivot superposés de manière concentrique sur le même axe de pivotement 101. Par exemple, l'ensemble pivot 200 comporte un pivot intermédiaire 100c disposé entre un pivot supérieur 100a et un pivot inférieur 100b. Le pivot intermédiaire 100c peut avoir une épaisseur plus grande que celle des pivots supérieur 100a et inférieur 100b. Par exemple, l'épaisseur de chacun des pivots supérieur 100a et inférieur 100 b peut deux être la moitié de celle du pivot intermédiaire 100c. Un tel arrangement permet à l'ensemble pivot 200 d'être plus symétrique par rapport au plan P. De la sorte, il est possible de minimiser la torsion du pivot intermédiaire 100c. Un tel ensemble pivot peut comprendre une pièce de couplage inter-étage 15 entre le pivot inférieur 100b et le pivot intermédiaire 100c et entre le pivot intermédiaire 100c et le pivot supérieur 100a. Les deux pièces de couplage inter-étage 15 peuvent être solidarisées. Dans ce cas, l'ensemble pivot 200 fonctionne comme s'il comprenait deux pivots 100.

Dans le cas d'un ensemble pivot 200 comprenant plusieurs pivots 100 (étages) empilés, la sortie 2 (ou les sorties) intermédiaire(s) entre chaque pivot 100 constitue un degré de liberté interne. Aussi, il est possible d'ajouter un mécanisme auxiliaire permettant d'asservir le (ou les) degrés de liberté interne au mouvement externe de la sortie du pivot 100. Autrement dit, il est possible de relier l'anneau mobile 2a de la sortie à la pièce de couplage inter-étage 15 de sorte que cette dernière fasse la moitié de la course angulaire par rapport à l'anneau mobile 2a supérieur.

Dans le cas d'un ensemble pivot 200 comprenant plusieurs pivots 100 (étages) empilés, il est possible de décaler angulairement la sortie du pivot inférieur 100b par rapport à l'entrée du pivot supérieur 100a. C'est-à-dire, de créer une précharge statique et déplacer le point d'équilibre de la pièce de couplage inter-étage. Ainsi la position angulaire de la première lame principale 6 du pivot inférieur 100b n'est pas coplanaire de la première lame principale 6 du pivot supérieur 100a.

Encore selon une autre forme d'exécution, il est possible de pré-défléchir les lames de couplage 12, 13 afin de réduire la course angulaire de l'élément de couplage 14 (par exemple de moitié). Pour ce faire, on peut soit usiner les lames de couplage 12, 13 préalablement défléchies selon leur mode exact de déformation, ou selon un mode approximé. On peut également usiner les lames de couplage 12, 13 essentiellement droites et les défléchir par précharge et fixation lors d'une étape ultérieure à l'usinage.

La figure 13 illustre l'élément de couplage 14 comportant deux lames de couplage parallèles 12, 13, selon trois variantes. Dans la variante de la figure 13a, les lames de couplage 12, 13 sont usinées essentiellement droites et non-préchargées. Dans la variante des figures 13b et 13c, les lames de couplage 12, 13 sont usinées déformée et non-préchargées, ou encore, usinées droites puis préchargées. Dans ces deux dernières variantes, les performances de raideur sont améliorées pour des angles de déflexion élevés des lames 12, 13 et les effets des mouvements parasites des éléments de couplage 14 (effet quadratique) sont diminués. Dans la variante de la figure 13c, les effets sont les mêmes que dans la variante de la figure 13b mais, de plus, la contrainte mécanique dans les lames de couplage 12, 13 est diminuée.

La figure 13c illustre un exemple de réalisation particulier dans lequel le cadre rigide long 11 de l'élément de couplage 14 comporte une fente 20 et une goupille 22 dans un logement 21. Cet arrangement permet d'usiner les lames de couplage 12, 13 droites dans le cadre rigide long 11 lorsque la fente 20 est élargie, c'est-à-dire lorsqu'une première portion 23 du cadre rigide long 11, sur laquelle une extrémité des lames 12, 13 est fixée, est éloignée d'une seconde portion 24 du cadre rigide long 11. Par la suite, la fente 20 est fermée en rapprochant la première portion 23 de la seconde portion 24, par flexion des lames de couplage 12, 13. Après la fermeture de la fente 20, la première portion 23 peut être solidarisée à la seconde portion 24 par clipsage, collage ou tout autre moyen adéquat.

La figure 14 compare les performances de raideurs transverses du pivot 100 de l'invention avec celle d'un pivot typique des mécanismes flexibles, plus particulièrement d'un pivot flexible dit "papillon" tel que décrit dans le document "S. Henein, P. Spanoudakis, S. Droz, L. I. Myklebust, and E. Onillon, "Flexure pivot for aerospace mechanisms," in 10th European Space Mechanisms and Tribology Symposium, San Sebastian, Spain, 2003, pp. 285-288". On voit que l'on gagne un demi ordre de grandeur sur les trois grandeurs comparées en fin de course. Notons que la comparaison se fait sur une base dimensionnelle semblable.

On comprendra qu'au moins l'une de la pièce fixe 1 et la pièce mobile 2 peut prendre une forme autre que celle d'un anneau. Par exemple, la pièce fixe 1 et/ou la pièce mobile 2 peut prendre une forme triangulaire, quadrilatérale, polygonale, elliptique, ou toute autre forme. Préférablement la pièce fixe 1 et la pièce mobile 2 sont arrangées de sorte que le centre d'inertie de la pièce fixe 1 et mobile 2 coïncide avec l'axe 101 de pivotement du pivot.

Ce pivot peut être utilisé pour des applications dans le domaine de l'instrumentation de précision, spatiale en particulier, mais aussi dans les domaines de la robotique, des mécanismes industriels de haute précision, en technologie du vide ou encore dans l'horlogerie.

**Numéros de référence employés sur les figures**

| | |
|---|---|
| 1 | pièce fixe, anneau fixe |
| 1b | anneau fixe inférieur |
| 2 | pièce mobile, anneau mobile |
| 2a | anneau mobile du pivot supérieur |
| 3 | jonction rigide |
| 4 | première liaison |
| 4a | première liaison supérieure |
| 4b | première liaison inférieure |
| 5 | seconde liaison fixe |
| 6 | première lame principale |
| 7 | seconde lame principale |

| | | |
|---|---|---|
| 8 | | jonctions intermédiaires |
| 9 | | élément flexible |
| 10 | | cadre rigide court |
| 11 | | cadre rigide long |
| 12, 13, 16 | | lame de couplage |
| 14 | | élément de couplage, lames parallèles |
| 141 | | table de translation |
| 15 | | pièce de couplage inter-étage |
| 17 | | portion de rigidification |
| 18 | | point d'inflexion |
| 19 | | ouverture |
| 20 | | fente |
| 21 | | logement |
| 22 | | goupille |
| 23 | | première portion |
| 24 | | seconde portion |
| 25 | | fente d'expansion |
| 80 | | élément glissant |
| 100 | | pivot |
| 100a | | pivot supérieur |
| 100b | | pivot inférieur |
| 100c | | pivot intermédiaire |
| 101 | | axe de pivotement du pivot |
| 200 | | ensemble pivot |
| P | | plan |
| p | | pivots fictifs |
| $\theta_1$ | | première amplitude angulaire |
| $\theta_2$ | | seconde amplitude angulaire |

## Revendications

1. Mécanisme pivot (100) pour le guidage en rotation, comprenant:

   une pièce mobile (2) relié à une pièce fixe (1) par l'intermédiaire de liaisons flexibles (9);
   les éléments flexibles (9) étant configurés de manière à guider la pièce mobile (2) selon un mouvement en rotation dans un plan (P), autour d'un axe de pivotement (101) perpendiculaire au un plan (P);
   chacune des liaisons flexibles (9) comprenant une jonction intermédiaire (8), chaque jonction intermédiaire (8) étant séparée des jonctions intermédiaires (8) adjacentes par une fente d'expansion (25), la fente d'expansion (25) étant configurée pour s'élargir lors de la rotation de la pièce mobile (2), de manière à ce que la pièce mobile (2) puisse pivoter selon une seconde amplitude angulaire ($\theta_2$) plus grande qu'une première amplitude angulaire ($\theta_1$) obtenue en absence de ladite fente d'expansion;
   **caractérisé en ce que**
   les jonctions intermédiaires (8) sont reliées entre elles par un élément de couplage (14);
   et **en ce que** chacun des éléments de couplage (14) est configuré de manière à empêcher un mouvement hors du plan (P) et un mouvement latéral dans le plan (P), de la pièce mobile (2).

2. Le mécanisme pivot selon la revendication 1,
   dans lequel chacune des liaisons flexibles (9) comprend une première lame principale (6) et une seconde lame principale (7), chacune des lames principales (6, 7) s'étendant radialement à partir de l'axe de pivotement (101);
   une extrémité de la première et seconde lame principale (6, 7) étant reliée à la pièce mobile (2) et à l'anneau fixe (1), respectivement; la première et seconde lame principale (6, 7) étant reliée entre elles par le biais d'une jonction intermédiaire (8).

3. Le mécanisme pivot selon la revendication 1 ou 2,
   dans lequel au moins l'un des éléments de couplage (14) comprend un élément flexible, un élément glissant, ou un élément roulant.

**4.** Le mécanisme pivot selon la revendication 3,
dans lequel au moins l'un des éléments de couplage (14) comprend une seule lame de couplage (16) ou au moins deux lames de couplage (12, 13) arrangées de manière parallèle.

**5.** Le mécanisme pivot selon la revendication 4,
dans lequel les extrémités de la lame de couplage (12, 13, 16) sont fixées à un cadre rigide (11, 10) solidaire de la jonction intermédiaire (8).

**6.** Le mécanisme pivot selon l'une des revendications 1 à 5,
dans lequel une extrémité de chacune des liaisons flexibles (9) est reliée à la pièce fixe (1) par une seconde liaison fixe (5) et l'autre extrémité est reliée à la pièce mobile (2) par une première liaison (4).

**7.** Le mécanisme pivot selon l'une des revendications 1 à 6,
dans lequel les lames principales (6, 7) comportent une ou plusieurs portions de rigidification (17).

**8.** Le mécanisme pivot selon l'une des revendications 1 à 7,
dans lequel les lames principales (6, 7) comportent un profil non-droit (18).

**9.** Le mécanisme pivot selon l'une des revendications 1 à 8,
dans lequel chacune des lames principales (6, 7) comportent une variation de section le long de l'axe longitudinal de la lame (6, 7).

**10.** Le mécanisme pivot selon la revendication 9,
dans lequel variation de section est obtenue par une épaisseur non-constante de la lame principale (6, 7) ou par une largeur non-constante de la lame principale (6, 7).

**11.** Le mécanisme pivot selon la revendication 10,
dans lequel les lames principales (6, 7) comportent au moins une ouverture (19).

**12.** Le mécanisme pivot selon l'une des revendications 1 à 11,
dans lequel les première et seconde lames principales (6, 7) sont arrangées de manière non radiale autour de l'axe de pivotement (101).

**13.** Le mécanisme pivot selon la revendication 12,
dans lequel les première et seconde lames principales (6, 7) sont décalées latéralement, par rapport à la direction radiale.

**14.** Le mécanisme pivot selon la revendication 13,
dans lequel les première et seconde lames principales (6, 7) sont décalées latéralement par paires, de sorte que chacune des deux lames (6, 7) se croisent en un point qui est décalé par rapport au centre géométrique du pivot (100).

**15.** Le mécanisme pivot selon l'une des revendications 1 à 14,
dans lequel les lames principales (6, 7) sont inclinées par rapport à leur orientation radiale dans le plan (P).

**16.** Ensemble pivot (200) comprenant au moins deux mécanismes pivots (100a, 100b) selon l'une des revendications 1 à 14, les mécanismes pivots (100a, 100b) étant montés superposés de manière concentrique sur le même axe de pivotement (101).

**17.** Ensemble pivot (200) selon la revendication 16,
dans lequel le pivot supérieur 100a et le pivot inférieur 100b sont assemblés avec ou sans retournement selon un axe latéral d'un des deux mécanismes pivots (100a, 100b).

**18.** Ensemble pivot (200) selon la revendication 17,
dans lequel un des deux mécanismes pivots (100a, 100b) est, ou les deux mécanismes pivots sont, soumis à une précharge lors de l'assemblage.

**Patentansprüche**

1. Schwenkmechanismus (100) zur Drehführung, der enthält:

   ein bewegliches Bauteil (2), das über flexible Verbindungen (9) mit einem ortsfesten Bauteil (1) verbunden ist; wobei die flexiblen Elemente (9) so konfiguriert sind, dass sie das bewegliche Bauteil (2) gemäß einer Drehbewegung in einer Ebene (P) um eine Schwenkachse (101) lotrecht zu der Ebene (P) führen; wobei jede der flexiblen Verbindungen (9) eine Zwischenverbindung (8) enthält, wobei jede Zwischenverbindung (8) von den benachbarten Zwischenverbindungen (8) durch einen Dehnungsschlitz (25) getrennt ist, wobei der Dehnungsschlitz (25) konfiguriert ist, sich bei der Drehung des beweglichen Bauteils (2) zu verbreitern, damit das bewegliche Bauteil (2) gemäß einer zweiten Winkelamplitude ($\theta2$) schwenken kann, die größer ist als eine erste Winkelamplitude ($\theta1$), die in Abwesenheit des Dehnungsschlitzes erhalten wird; **dadurch gekennzeichnet, dass** die Zwischenverbindungen (8) durch ein Kopplungselement (14) miteinander verbunden sind; und dass jedes der Kopplungselemente (14) so konfiguriert ist, dass es eine Bewegung des beweglichen Bauteils (2) außerhalb der Ebene (P) und eine seitliche Bewegung in der Ebene (P) verhindert.

2. Schwenkmechanismus nach Anspruch 1, wobei jede der flexiblen Verbindungen (9) eine erste Hauptlamelle (6) und eine zweite Hauptlamelle (7) enthält, wobei jede der Hauptlamellen (6, 7) sich radial ausgehend von der Schwenkachse (101) erstreckt; wobei ein Ende der ersten und zweiten Hauptlamelle (6, 7) mit dem beweglichen Bauteil (2) bzw. dem ortsfesten Ring (1) verbunden ist; wobei die erste und die zweite Hauptlamelle (6, 7) mittels einer Zwischenverbindung (8) miteinander verbunden sind.

3. Schwenkmechanismus nach Anspruch 1 oder 2, wobei mindestens eines der Kopplungselemente (14) ein flexibles Element, ein gleitendes Element oder ein rollendes Element enthält.

4. Schwenkmechanismus nach Anspruch 3, wobei mindestens eines der Kopplungselemente (14) eine einzige Kopplungslamelle (16) oder mindestens zwei parallel angeordnete Kopplungslamellen (12, 13) enthält.

5. Schwenkmechanismus nach Anspruch 4, wobei die Enden der Kopplungslamelle (12, 13, 16) an einem steifen Rahmen (11, 10) befestigt sind, der fest mit der Zwischenverbindung (8) verbunden ist.

6. Schwenkmechanismus nach einem der Ansprüche 1 bis 5, wobei ein Ende jeder der flexiblen Verbindungen (9) durch eine zweite ortsfeste Verbindung (5) mit dem ortsfesten Bauteil (1) verbunden ist, und das andere Ende durch eine erste Verbindung (4) mit dem beweglichen Bauteil (2) verbunden ist.

7. Schwenkmechanismus nach einem der Ansprüche 1 bis 6, wobei die Hauptlamellen (6, 7) einen oder mehrere Versteifungsabschnitte (17) aufweisen.

8. Schwenkmechanismus nach einem der Ansprüche 1 bis 7, wobei die Hauptlamellen (6, 7) ein nicht gerades Profil (18) aufweisen.

9. Schwenkmechanismus nach einem der Ansprüche 1 bis 8, wobei jede der Hauptlamellen (6, 7) eine Querschnittsänderung entlang der Längsachse der Lamelle (6, 7) aufweist.

10. Schwenkmechanismus nach Anspruch 9, wobei die Querschnittsänderung durch eine nicht konstante Dicke der Hauptlamelle (6, 7) oder durch eine nicht konstante Breite der Hauptlamelle (6, 7) erhalten wird.

11. Schwenkmechanismus nach Anspruch 10, wobei die Hauptlamellen (6, 7) mindestens eine Öffnung (19) aufweisen.

12. Schwenkmechanismus nach einem der Ansprüche 1 bis 11, wobei die ersten und zweiten Hauptlamellen (6, 7) nicht radial um die Schwenkachse (101) angeordnet sind.

13. Schwenkmechanismus nach Anspruch 12, wobei die ersten und zweiten Hauptlamellen (6, 7) seitlich bezüglich der radialen Richtung versetzt sind.

14. Schwenkmechanismus nach Anspruch 13, wobei die ersten und zweiten Hauptlamellen (6, 7) paarweise seitlich versetzt sind, so dass jede der zwei Lamellen (6, 7) sich in einem Punkt kreuzen, der bezüglich der geometrischen Mitte des Schwenkmechanismus (100) versetzt ist.

15. Schwenkmechanismus nach einem der Ansprüche 1 bis 14, wobei die Hauptlamellen (6, 7) bezüglich ihrer radialen Ausrichtung in der Ebene (P) geneigt sind.

16. Schwenkeinheit (200), die mindestens zwei Schwenkmechanismen (100a, 100b) nach einem der Ansprüche 1 bis 14 enthält, wobei die Schwenkmechanismen (100a, 100b) konzentrisch übereinander liegend auf die gleiche Schwenkachse (101) montiert sind.

17. Schwenkeinheit (200) nach Anspruch 16, wobei der obere Schwenkmechanismus (100a) und der untere Schwenkmechanismus (100b) mit oder ohne Wenden gemäß einer seitlichen Achse eines der zwei Schwenkmechanismen (100a, 100b) zusammengebaut werden.

18. Schwenkeinheit (200) nach Anspruch 17, wobei einer der zwei Schwenkmechanismen (100a, 100b) oder die zwei Schwenkmechanismen beim Zusammenbau mit einer Vorspannung beaufschlagt wird oder werden.

**Claims**

1. Pivot mechanism (100) for guiding in rotation, comprising:

   a mobile part (2) linked to a fixed part (1) via flexible links (9);
   the flexible elements (9) being configured so as to guide the mobile part (2) by a rotational movement in a plane (P), about a pivoting axis (101) perpendicular to the plane (P);
   each of the flexible links (9) comprising an intermediate junction (8), each intermediate junction (8) being separated from the adjacent intermediate junctions (8) by an expansion slit (25), the expansion slit (25) being configured to widen upon the rotation of the mobile part (2), so that the mobile part (2) can pivot according to a second angular amplitude ($\theta_2$) greater than a first angular amplitude ($\theta_1$) obtained in the absence of said expansion slit;
   **characterized in that**
   the intermediate junctions (8) are linked to one another by a coupling element (14);
   and **in that** each of the coupling elements (14) is configured so as to prevent a movement out of the plane (P) and a lateral movement in the plane (*P*), of the mobile part (2).

2. Pivot mechanism according to Claim 1,
   wherein each of the flexible links (9) comprises a first main blade (6) and a second main blade (7), each of the main blades (6, 7) extending radially from the pivoting axis (101);
   one end of the first and second main blade (6, 7) being linked to the mobile part (2) and to the fixed ring (1), respectively; the first and second main blades (6, 7) being linked to one another through an intermediate junction (8).

3. Pivot mechanism according to Claim 1 or 2,
   wherein at least one of the coupling elements (14) comprises a flexible element, a sliding element, or a rolling element.

4. Pivot mechanism according to Claim 3,
   wherein at least one of the coupling elements (14) comprises a single coupling blade (16) or at least two coupling blades (12, 13) arranged parallel to one another.

5. Pivot mechanism according to Claim 4,
   wherein the ends of the coupling blade (12, 13, 16) are fixed to a rigid frame (11, 10) secured to the intermediate junction (8).

6. Pivot mechanism according to one of Claims 1 to 5, wherein one end of each of the flexible links (9) is linked to the fixed part (1) by a second fixed link (5) and the other end is linked to the mobile part (2) by a first link (4).

7. Pivot mechanism according to one of Claims 1 to 6, wherein the main blades (6, 7) comprise one or more stiffening portions (17).

8. Pivot mechanism according to one of Claims 1 to 7, wherein the main blades (6, 7) have a non-straight profile (18).

9. Pivot mechanism according to one of Claims 1 to 8, wherein each of the main blades (6, 7) comprises a section variation along the longitudinal axis of the blade (6, 7).

10. Pivot mechanism according to Claim 9,
wherein the section variation is obtained by a non-constant thickness of the main blade (6, 7) or by a non-constant width of the main blade (6, 7).

11. Pivot mechanism according to Claim 10,
wherein the main blades (6, 7) comprise at least one opening (19).

12. Pivot mechanism according to one of Claims 1 to 11, wherein the first and second main blades (6, 7) are arranged non-radially about the pivoting axis (101).

13. Pivot mechanism according to Claim 12,
wherein the first and second main blades (6, 7) are laterally offset relative to the radial direction.

14. Pivot mechanism according to Claim 13,
wherein the first and second main blades (6, 7) are laterally offset in pairs, such that each of the two blades (6, 7) cross at a point which is offset relative to the geometrical centre of the pivot (100).

15. Pivot mechanism according to one of Claims 1 to 14, wherein the main blades (6, 7) are inclined relative to their radial orientation in the plane (P).

16. Pivot assembly (200) comprising at least two pivot mechanisms (100a, 100b) according to one of Claims 1 to 14, the pivot mechanisms (100a, 100b) being mounted superposed concentrically on the same pivoting axis (101) .

17. Pivot assembly (200) according to Claim 16,
wherein the top pivot 100a and the bottom pivot 100b are assembled with or without turnover according to a lateral axis of one of the two pivot mechanisms (100a, 100b).

18. Pivot assembly (200) according to Claim 17,
wherein one of the two pivot mechanisms (100a, 100b) is, or both the pivot mechanisms are, subject to a preloading upon assembly.

Fig. 1

Fig. 2

Fig. 3

Fig. 4a

Fig. 4b

Fig. 4c

Fig. 4d

Fig. 5a

Fig. 5b

Fig. 5c

Fig. 5d

17

6, 7

19

18

D

18

E

C

B

A

**Fig. 6**

14

8

8

80

14

14

8

**Fig. 7**

Fig. 8a

Fig. 8b

Fig. 9a

Fig. 9b

Fig. 10

Fig. 11

Fig. 12

Fig. 13

Fig. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0974761 A
- EP 2256039 A

- WO 2017077469 A

**Littérature non-brevet citée dans la description**

- **S. HENEIN ; P. SPANOUDAKIS ; S. DROZ ; L. I. MYKLEBUST ; E. ONILLON.** Flexure pivot for aerospace mechanisms. *10th European Space Mechanisms and Tribology Symposium,* 2003, 285-288